# EUROPEAN PATENT APPLICATION

(11) **EP 1 533 988 A1**
(43) Date of publication of application: **25.05.2005**
(21) Application number: 04021710.1
(22) Date of filing: 13.09.2004
(51) Int. Cl.: H04N 1/00

(54) **Multifunction apparatus and distribution server**

(30) Priority: 19.11.2003 JP 2003389202
(71) Applicant: MATSUSHITA ELECTRIC INDUSTRIAL CO., LTD., Kadoma-shi, Osaka 571-8501 (JP)
(72) Inventor: Kitajima, Ikuo, Tokyo 177-0031 (JP); Ozaki, Minoru, Kawanishi-shi, Hyogo 666-0033 (JP); Osanai, Akira, Yokohama-shi, Kanagawa 220-0062 (JP); Matsuzawa, Yukari, Tokyo 152-0011 (JP); Sakamoto, Masakiyo, Tokyo 146-0093 (JP)
(74) Representative: Grünecker, Kinkeldey, Stockmair & Schwanhäusser Anwaltssozietät

(57) **Abstract**

A multifunction apparatus transmits a menu screen obtaining request and a sort key to a distribution server located on a LAN. Upon receiving the menu screen obtaining request and the sort key from the multifunction apparatus, the distribution server sorts, according to the sort key, the order of menus displayed on the menu screen, and transmits sorted menu screen back to the multifunction apparatus. The multifunction apparatus displays the sorted menu screen, received from the distribution server, on an LCD. When a menu is selected from the displayed menu screen, the multifunction apparatus executes the menu.

## Description

### BACKGROUND OF THE INVENTION

### 1. Field of the Invention

The present invention relates to a multifunction apparatus that utilizes a menu necessary for an operation by receiving the menu via a network. The invention also relates to a distribution server that distributes such a menu to the multifunction apparatus.

### 2. Description of Related Art

In recent years, it has become customary for multifunction apparatuses to obtain an address book in order to distribute scanned data to terminals (PCs) via a network. The distribution server generates such an address book for the scanned data distribution. In the address book, terminals and document management servers are defined. The multifunction apparatus obtains the address book by pressing an address obtaining button displayed on a panel, and obtains an address as a distribution destination of the scanned data. Then, the document scanning process is performed and the scanned data is transmitted, via the distribution server, to the distribution destination having the selected address.

Upon registering a menu, an apparatus has been also introduced, in which a user creates a menu screen that minimizes the number of operations to reach a desired menu and stores the menu (e.g., Related Art 1).

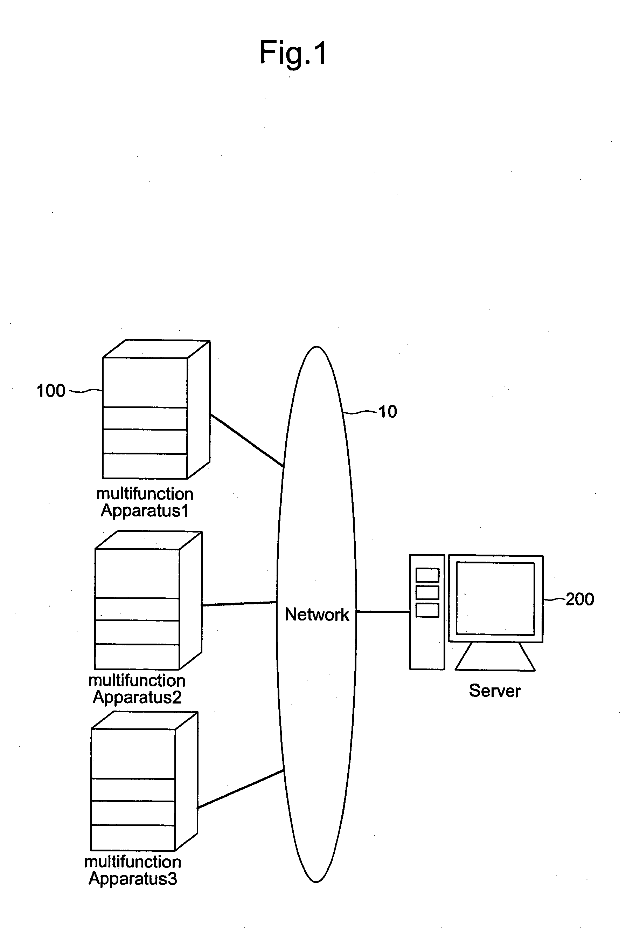

### [Related Art] Japanese Patent Laid Open Application H9-54668 (paragraph 0018; Fig.1)

However, with the above-described conventional technology, it is impossible to display jobs customized for each individual. Therefore, the user has to look for a desired menu from menus shared by a plurality users of the same multifunction apparatus. In addition, storing the menu information (to be used by the users) within the apparatus requires a storage memory.

### SUMMARY OF THE INVENTION

The present invention addresses the above described problems. The purpose of the invention is to provide a multifunction apparatus and a distribution server that do not burden the memory capacity of the multifunction apparatus and that are more time saving for the user to find a desired menu from a plurality of menus.

According to the present invention, a menu screen obtaining request and a sort key are transmitted from the multifunction apparatus to the distribution server on the network. As a response to the obtaining request, the distribution server transmits, to the multifunction apparatus, a menu screen that includes menus sorted according to the sort key. When the received menu screen is displayed on the multifunction apparatus display, a menu is selected (from the displayed menu screen) and executed.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a network configuration to which an embodiment of the present invention is applied;
Fig. 2 is a functional block diagram illustrating a multifunction apparatus of Fig. 1;
Fig. 3 is a schematic view of the multifunction apparatus of Fig. 2;
Fig. 4 is a plane view of a panel provided in the multifunction apparatus of Fig. 2;
Fig. 5 is a functional block diagram illustrating a distribution server of Fig. 1;
Fig. 6 (a) illustrates a configuration of a personal menu management table for user 1 (matsu1);
Fig. 6 (b) illustrates a configuration of the personal menu management table for user 2;
Fig. 6 (c) illustrates a configuration of the personal menu management table for user 3;
Fig. 7 illustrates a configuration a user information management table;
Fig. 8 is a flowchart illustrating a menu screen (personal menu) display operation at the multifunction apparatus and the distribution server;
Fig. 9 illustrates a configuration of an initial screen when a user logs into the distribution server;
Fig. 10 illustrates an example of a menu screen (personal menu) display;
Fig. 11 illustrates an example of a menu screen (shared menu) display;
Fig. 12 illustrates a transition of operation screens when the menu screen (personal menu) is displayed for the first operation;
Fig. 13 illustrates a transition of operation screens when the menu screen (personal menu) is displayed for the second operation; and
Fig. 14 is a flowchart for registering a sort key in the multifunction apparatus.

### DETAILED DESCRIPTION OF PREFERRED EMBODIMENTS

The embodiments of the distribution server system, provided by the multifunction apparatus and distribution server of the present invention, are explained in the following, in reference to the above-described drawings.

Fig. 1 illustrates a network configuration of the distribution server system. A plurality of multifunction apparatuses 100 and distribution servers 200 are connected to network 10. Although network 10 can be configured with a local area network (LAN) or the Internet, this embodiment employs a LAN for network 10. Multifunction apparatus 100 can be connected to network 10, and has a plurality of functions such as copier, printer, scanner, facsimile transmission/reception, and Internet communication functions. The multifunction apparatus of the present invention is not limited to the above-described functions.

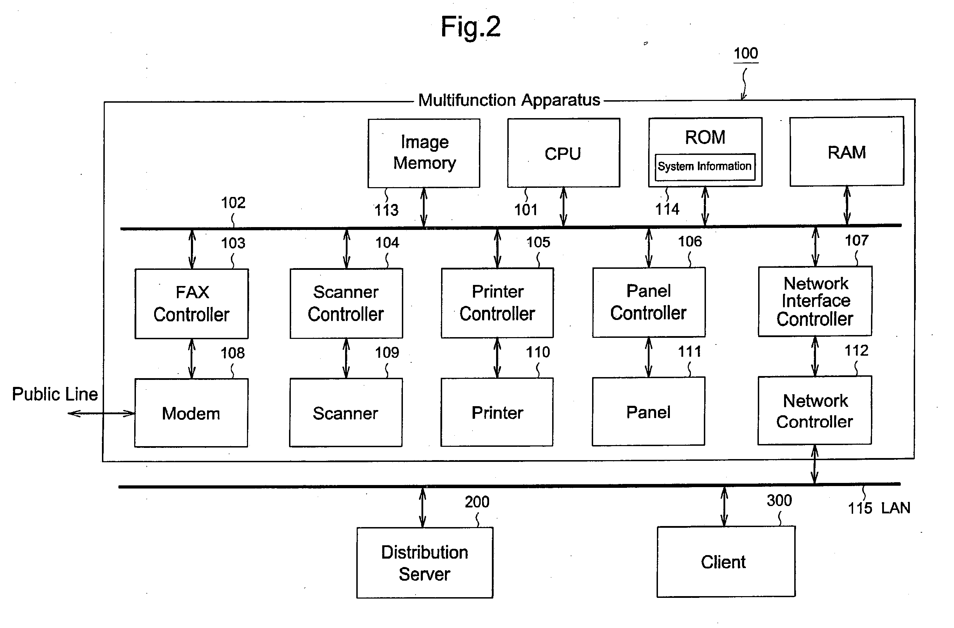

Fig. 2 is a detailed functional block diagram illustrating multifunction apparatus 100. In Fig. 2, through CPU 101 and via internal bus 102, multifunction apparatus 100 connects FAX controller 103, scanner controller 104, printer controller 105, panel controller 106, and network interface controller 107. Via modem 108, fax controller 103 exchanges image data with image memory 113, in order to perform facsimile transmission and reception. Scanner controller 104 performs a document scanning process by controlling scanner 109 and stores image data in image memory 113. Printer controller 105 controls printer 110 to print the image data stored in image memory 113. Panel controller 106 retrieves menu information stored in memory 114 and displays the data on panel 111. Network interface controller 107 controls network controller 112 that exchanges data generated by distribution server 200 and client 300 on LAN 115.

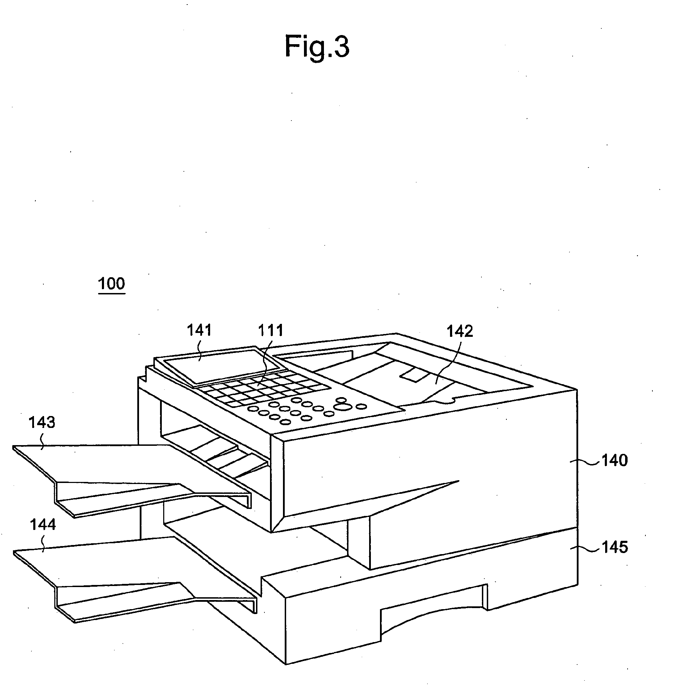

Fig. 3 is a schematic illustration of multifunction apparatus 100. In multifunction apparatus 100, scanner 109 and printer 110 are housed within body 140, together with other components such as CPU 101, ROM 114, and modem 108. Panel 111, having LCD 141, is located at the left side of the top surface of multifunction apparatus 100. At the right side of panel 111, document feeder 142 for feeding a document to scanner 109 is located. At the left side surface of multifunction apparatus 100, finisher trays 143 and 144, which receive ejected printed paper from printer 110, are aligned parallel in an approximately horizontal plane. Paper tray 145, which feeds paper to printer 110, is located at the bottom of multifunction apparatus 100.

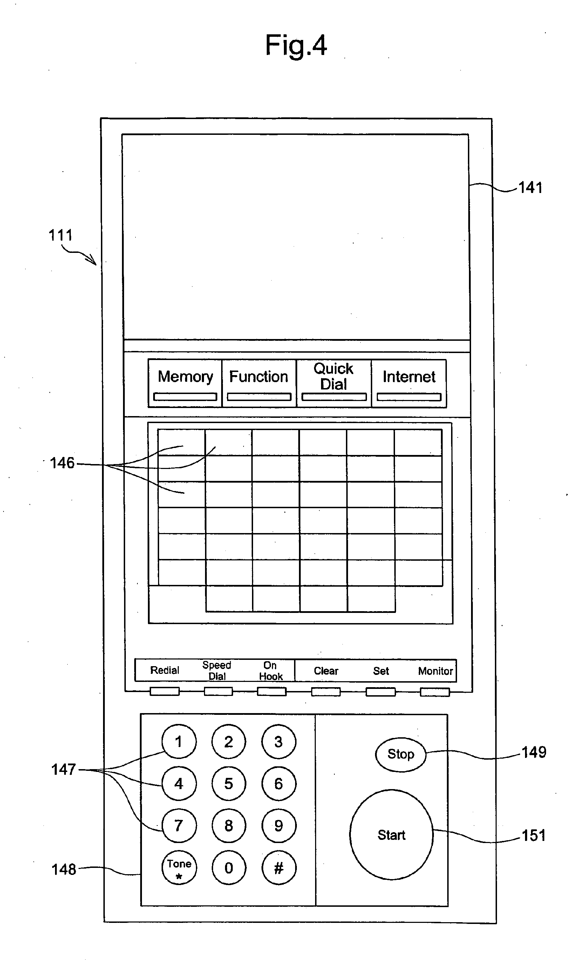

Fig. 4 is a plane view of panel 111 and LCD 141. At the lower end of LCD 141 includes a memory button, function button, quick dial button, and Internet button. The Internet button is pressed when an operator needs to switch the mode to the input mode for Internet facsimile communication.

A plurality of one-touch buttons 146 are aligned below the above-described buttons. Below one-touch buttons 146, a redial/pause button, speed dial button, sub-address/on-hook button, clear/monitor volume button, set button, and monitor button are provided. In addition, numeric part 148, having numeric keys 147, is located further below. Each numeric key 147 has alphabet letters applied to allow the alphabet input. At the right side of numeric part 148, stop button 149 and start button 151 are provided. The user inputs various data using numeric keys 147.

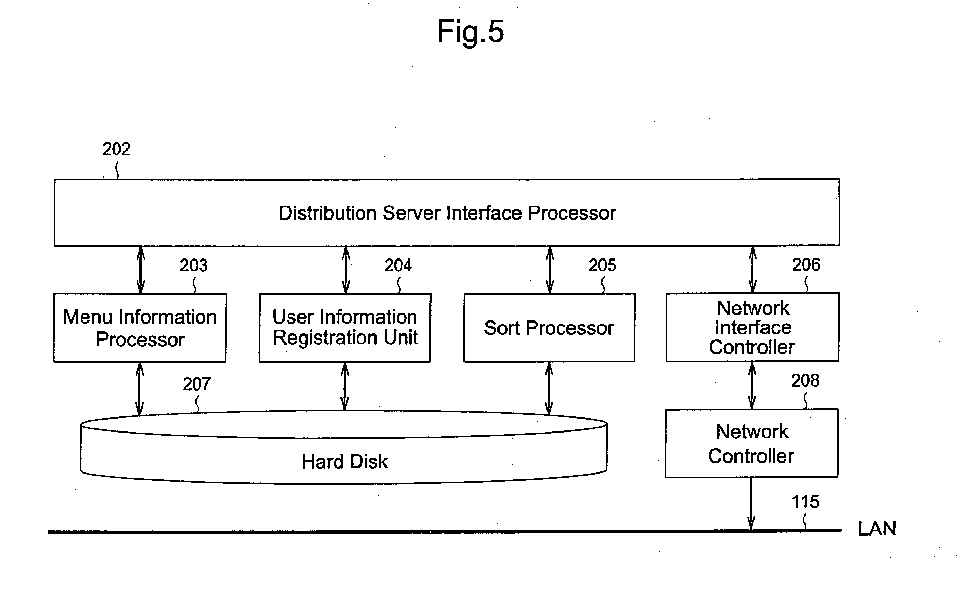

Fig. 5 is a functional block diagram of distribution server 200. In Fig. 5, distribution server interface processor 202 is connected to menu information processor 203, user information registration unit 204, sort processor 205, and network interface controller 206.

Menu information processor 203 retrieves menu information from hard disk 207. User information registration unit 204 registers personal menu information in hard disk 207, the personal menu information being registered personally by a user, as a job to be executed (copying, printing, scanning, FAX transmission/reception) by multifunction apparatus 100. Sort processor 205 sorts personal menu in accordance with the sort keys.

Hard disk 207 stores menu screen data that lists job names selectable from multifunction apparatus 100, and operation screen data that corresponds to each job. In addition, hard disk 207 stores a personal menu management table, user information management table, and personal job registration table.

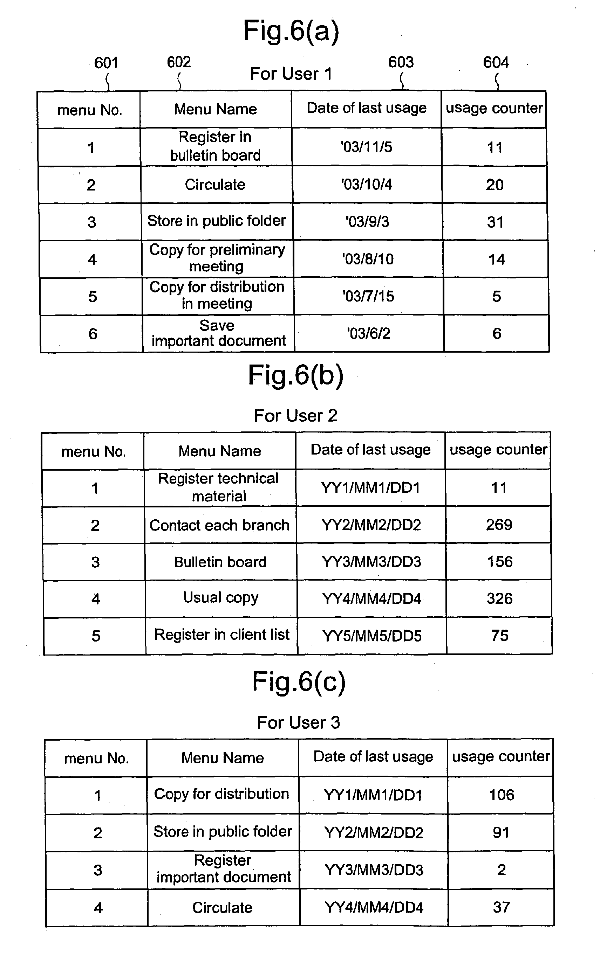

Figs. 6 (a), (b), and (c) illustrate configurations of the personal menu management table. The table is created for each user. The personal menu management table lists items such as "menu number" 601 (a serial number applied to each menu registered in the personal table), "menu name" 602 (indicating a name of personal menu registered by an individual), "date of last usage" 603 (indicating a last date on which a job corresponding to the menu name is performed), and "usage counter" 604 (indicating the number of times that the job corresponding to the menu name is executed). In this embodiment, "date of last usage" 603 and "usage counter" 604 are used as the "sort keys", but other types of sort keys can be arbitrarily set.

Fig. 6 (a) illustrates a personal table for user 1. User 1 currently registers 6 personal jobs in the personal table. The most frequently used menu (job) is menu No. 3, "store in public folder". Fig. 6 (b) illustrates a personal table for user 2, whereas Fig. 6 (c) illustrates a personal table for user 3.

The following illustrates job data necessary for executing a job, corresponding to "menu name" that is registered in the personal menu management table of Fig. 6. A job ID and job parameter are stored, in association with "menu name", in a personal job registration table that is generated for each user. For example, the personal job registration table registers data necessary for executing the job: "copy for distribution in meeting" ("menu name"), using multifunction apparatus 100. The personal job "copy for distribution in meeting" requires job parameters including a paper size, resolution, color, monochrome, number of copies, etc. In addition, "copy function" needs to be specified for the use among other functions of multifunction apparatus 100. Therefore, a job ID and job parameters specifying the usage function (startup subject function) are registered, in association with "menu name", in the personal job registration table. Multifunction apparatus 100 can execute the job on the document, the job being identified by "menu name", using the job ID and the parameters. Similarly, the personal job registration table registers job IDs and job parameters for other personal jobs having different "menu names".

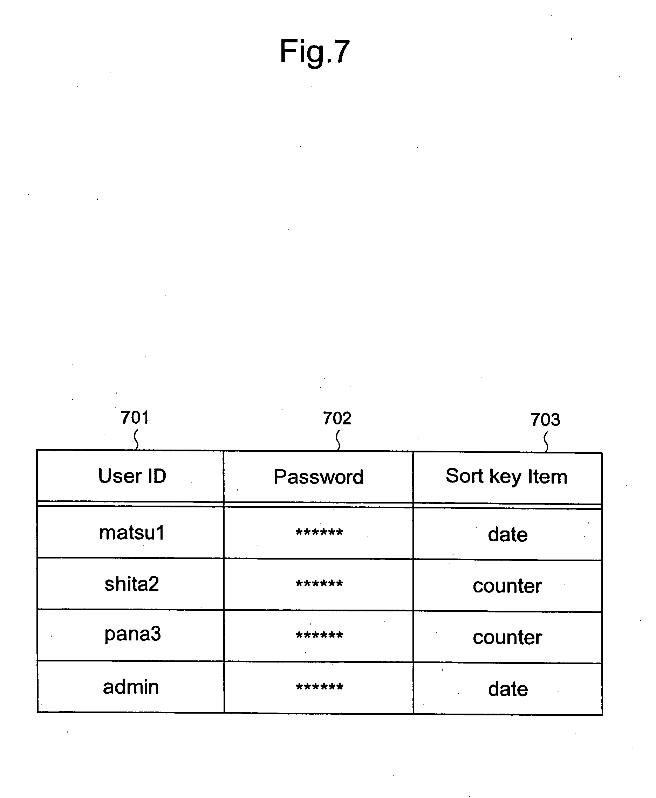

Fig. 7 illustrates an example of the configuration of the user information management table. The user information management table generates a record for each user. Each user record sets "user ID" 701 (used as user identification information), "password" 702 (used as authentication data), and sort key item 703. Sort key item 703 is used to register a sort key that determines the order of displaying personal menus on LCD 141 of multifunction apparatus 100. Although the sort key can be arbitrarily set by a user, this embodiment of the present invention employs a method of selecting a sort key from "date of last usage" 603 and "usage counter" 604 as shown in Fig. 6. In Fig. 7, "date" indicates "date of last usage", whereas "counter" indicates "usage counter".

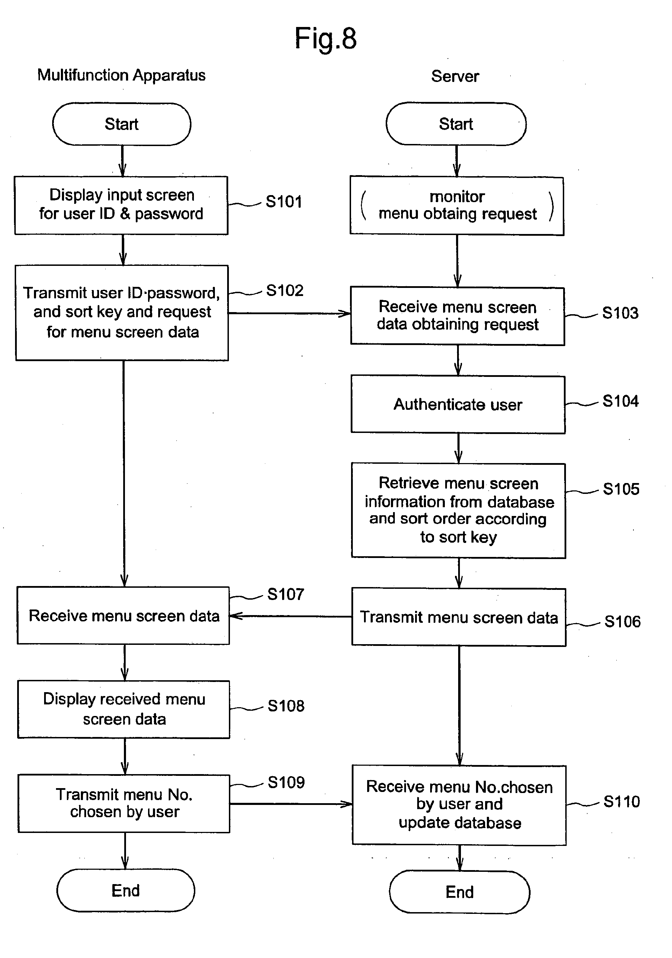

The operation of the present embodiment, having the above configuration, is illustrated as follows. Fig. 8 is a flowchart illustrating the menu selection at multifunction apparatus 100. The user, who has logged into distribution server 200 and selected a desired menu (job) from the personal menu, operates panel 111 to display an initial screen for the login operation.

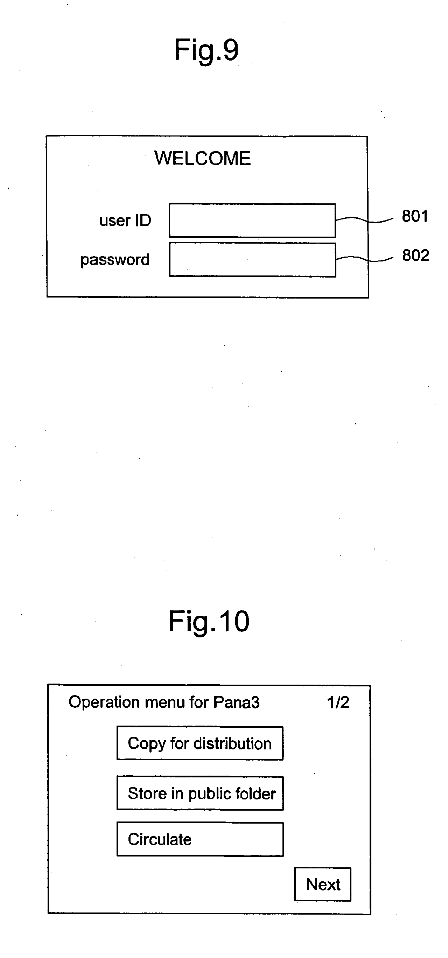

Multifunction apparatus 100 displays an initial screen (shown in Fig. 9) on LCD 141 according to the user's operation from the panel (S101). Then, multifunction apparatus 100 waits for an authentication data input from the user. By inputting the user ID in input box 801 of the initial screen (shown in Fig. 9) and the user password in input box 802, and confirming the above inputs, the user can transmit the authentication data (input user ID and password) and the menu screen (personal menu) obtaining request to distribution server 200 (S102). When transmitting the menu screen (personal menu) obtaining request, a sort key registered by the user is also transmitted. The sort key is pre-registered in ROM 114 by the user, as system information in association with the user ID. Based on the user ID, the user's sort key is retrieved. In the present embodiment, an arbitrary sort key is used for each user. However, a shared sort key can be registered and used for a group. The registration process of the sort key is later described.

In this example, the menu screen (personal menu) (shown in Fig. 10) means an operation screen that displays menu names registered in the personal menu management table of Fig. 6. In this embodiment, the maximum of 3 menu names are displayed in one operation screen, and a page scroll button is provided to view the next page. The menu screen (personal menu) shown in Fig. 10 is of a user who registered the personal menu management table shown in Fig. 6 (c). Especially, the menu screen (personal menu) is of user (user ID = Pana3), who is registered in the user information management table in Fig. 7.

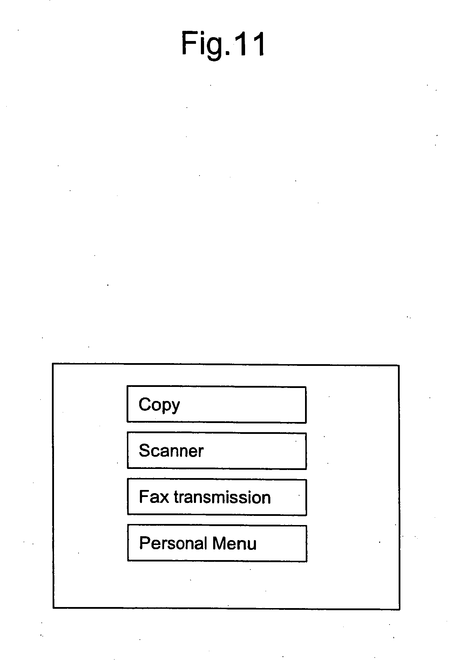

In addition, the menu screen (shared menu) can be stored in hard disk 207 of distribution server 200. The menu screen (shared menu) is an operation screen (shown in Fig. 11) that displays function items (such as copying, scanning, and FAX transmission), the function being provided by multifunction apparatus 100. For example, a configuration can be provided for the menu screen (shared menu) so that the menu screen (personal menu) obtaining request is made when "personal menu" item is selected from the menu screen (shared menu). In this case, the menu screen (shared menu) of Fig. 11 can be initially displayed prior to displaying the menu screen (personal menu) of Fig. 10.

Distribution server 200 receives the authentication data, menu screen (personal menu) obtaining request, and sort key (S103). Menu information processor 203 confirms that the identical authentication data (with the received authentication data) is registered in the user information management table (Fig. 7) (S104). Although not shown in the figure, when there is no identical authentication data or the data is not registered in the user information management table, the unsuccessful authentication message is transmitted back to multifunction apparatus 100.

Upon completing the user authentication, menu information processor 203 receives the menu screen (personal menu) obtaining request and retrieves the corresponding menu screen (personal menu) data from hard disk 207. In particular, menu information processor 203 accesses the personal menu management table (where the information for the authenticated user is registered) and retrieves the table data for the user. Then, sort processor 205 sorts the retrieved table data. To be specific, the menu name within the table data is sorted according to the received sort key (S105).

The following describes step S105 in detail. When user 1 of Fig. 6 (a) has user ID = matsu1, the sort key for matsu 1 is "date" as shown in Fig. 7. Therefore, sort processor 205 sorts the menu names in the order of "date of last usage", the menu names being registered in the personal menu management table of Fig. 6 (a). Accordingly, 6 registered menu names are sorted as 1-2-3-4-5-6 (menu numbers). When sort key received from multifunction apparatus 100 is "counter", the menu names are sorted as 3-2-4-1-6-5 (menu numbers).

After the menu names are sorted by sort processor 205 in accordance with the sort key, the menu screen (personal menu) is transmitted from distribution server 200 to multifunction apparatus 100 (requester) (S106).

Multifunction apparatus 100 receives the menu screen (personal menu) as a response to the menu screen (personal menu) obtaining request (S107). CPU 101 of multifunction apparatus 100 displays the received menu screen (personal menu) on LCD 141 (S108).

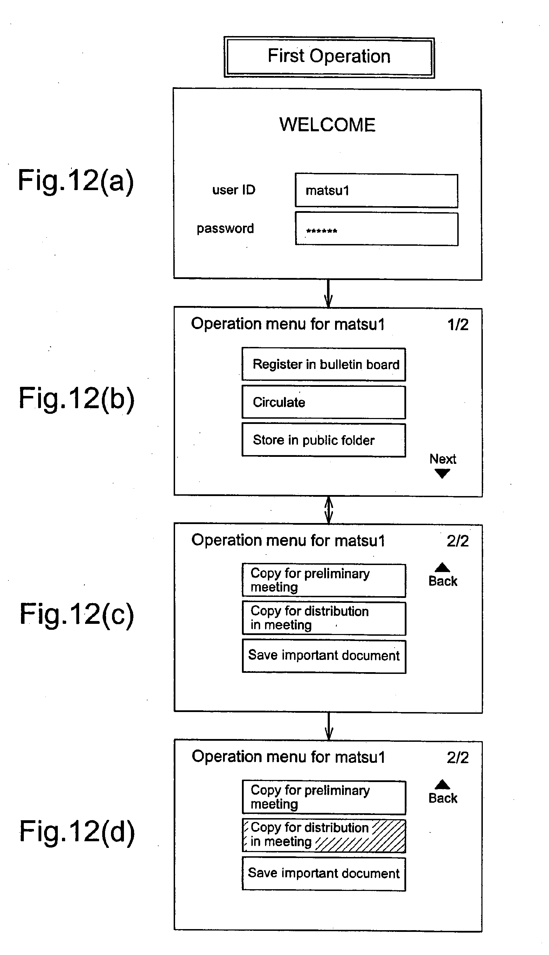

Fig. 12 illustrates a display example of the initial screen and menu screens (personal menu) that are displayed on LCD 141 of multifunction apparatus 100. In particular, Fig. 12 illustrates an example of the operation screens for user ID = matsu1, who is registered in the personal menu management table Fig. 6 (a). When the information is input in the initial screen (Fig. 12 (a)), the operation screen is changed to the menu screen (personal menu) (Fig. 12 (b)). When the next button is pressed, the next operation screen (Fig 12 (c)) is displayed.

Accordingly, even when a plurality of personal menus are registered, the operation screen having the sorted menu names (according to the sort key) is displayed, thereby making it possible to provide a convenient operational environment. When "date" is set as the sort key, the menu names are displayed in the order of date of last usage. Therefore, it is likely that the desired menu name appears in a higher rank in the first screen. When "counter" is set as a sort key, the menu name is displayed in the order of frequency. Therefore, it is likely that the desired menu name appears in a higher rank in the first screen, in this operation.

The sort key can be set arbitrarily and is not limited to the above two examples. When setting a sort key, it is preferable that the sort key is registered in association with the menu name, in the personal menu management table of distribution server 200.

Multifunction apparatus 100 receives a selection from the displayed menu screen (personal menu). As shown in Fig. 12 (d), the menu name selected by the user is highlighted. When the user confirms the selected job from the highlighted menu name, the information that specifies the highlighted menu name (menu number in Fig. 8) is transmitted to distribution server 200 (S109).

When distribution server 200 receives the menu number from multifunction apparatus 100, user information registration unit 204 accesses the user's personal menu management table. Then, the "date of last usage" (for the received menu number) is updated into the current time, and the "usage counter" is incremented by 1 (S110).

Then, the operation screen and job data necessary to execute the job of the received menu number are transmitted to multifunction apparatus 100.

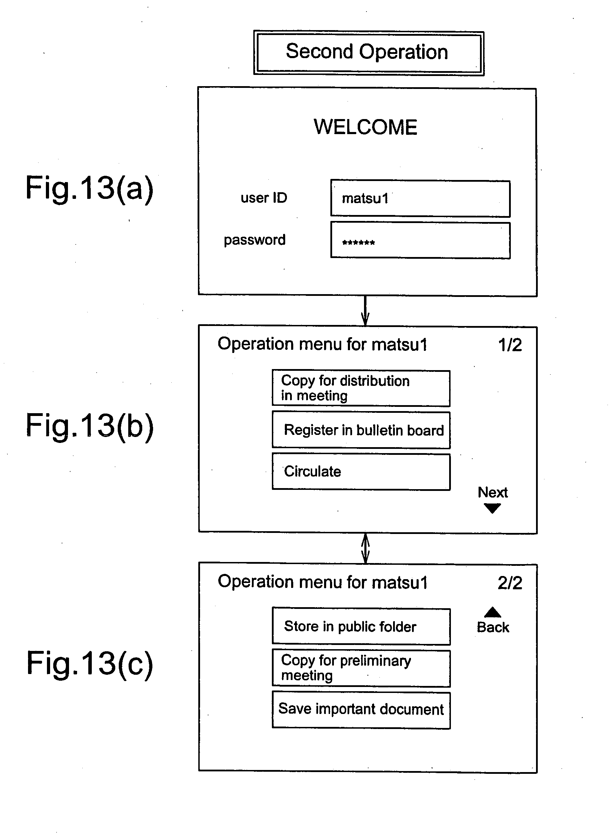

The updated "date of last usage" and "usage counter" are reflected for the next operation. Figs. 13 (a), (b), and (c) illustrate the transition of the operation screen when user ID = matsu1 operates for the second time. As shown in Fig. 12 (d), the operation immediately before has selected "copy to be distributed in meeting". When "date" is set as the sort key, the "date of last usage" of "copy to be distributed in meeting" is the most recent. Therefore, "copy to be distributed in meeting" is displayed in the top of the list as shown in Fig. 13 (a). Other menus are not selected, thus the order of the menu display is not changed.

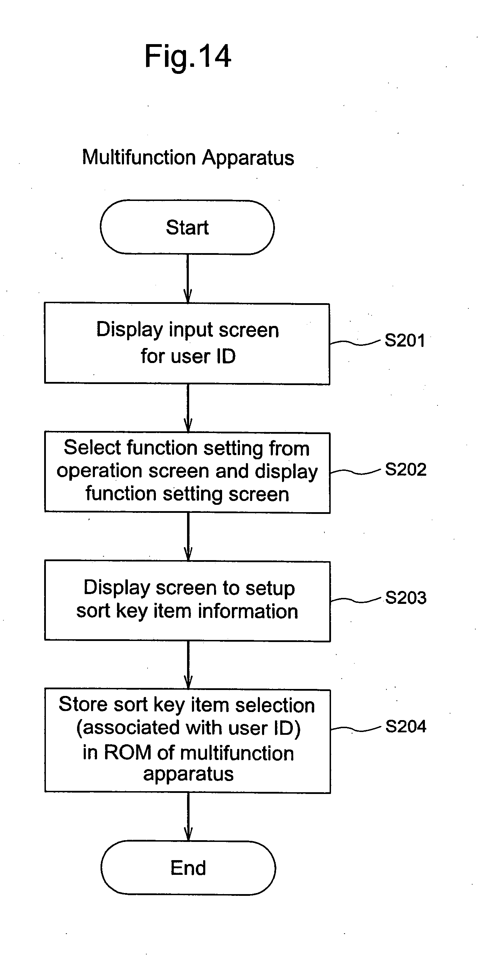

Next, the flowchart of Fig. 14 is used to illustrate the sort key registration in multifunction apparatus 100. The user operates panel 111 to display the initial screen for the user authentication.

In response to the panel operation, multifunction apparatus 100 displays a user ID input screen on LCD 141 (S201). When the user ID is input from the user ID input screen, the user authentication is performed based on the input user ID. Then, an operation screen is displayed, the screen including a "function setting" button for registering system information and the like. The operation screen data is stored in ROM 114 in advance. When the "function setting" button is pressed from the displayed operation screen, a function setting screen is displayed (S202). The displayed function setting screen has at least sort keys that are used for sorting data. For example, sort keys such as "date" and "counter" can be displayed. In particular, the menu names displayed on panel 111 can be sorted according to when the menu was used last or how often the menu has been used. The selectable sort keys are displayed on panel 111 by the pull down method (S203), so that the user can select a desired sort key.

The selected sort key is stored as system information, in ROM 114, in association with the user ID (S204). When another sort key is registered in association with the same user ID, the newer information overwrites the old one. Upon registering a sort key of a group, a user ID of the group is used. In this case, the personal menu registered in distribution server 200 becomes a menu shared by the group.

According to the above operation, the sort key arbitrarily selected by the user is set in multifunction apparatus 100. Until another sort key is set, the currently selected sort key is transmitted to distribution server 200, together with the menu screen (personal menu) obtaining request.

According to the present embodiment, the user's personal menu is pre-registered in distribution server 200, and displayed through the menu screen (personal menu) on multifunction apparatus 100, in response to a menu screen (personal menu) obtaining request from multifunction apparatus 100. Accordingly, the personal menu for all users can be registered without burdening the memory capacity of multifunction apparatus 100, thereby improving the operation environment of multifunction apparatus 100. In addition, menu names are sorted, according to the sort key, in the order requested by the user. Therefore, it is possible for the user to save time in finding a desired menu among many menus personally registered for the user.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2003-389202 filed on November 19, 2003, entire content of which is expressly incorporated by reference herein.

## Claims

1. A multifunction apparatus that displays a plurality of menus and executes a menu chosen from the menus, the apparatus comprising:
a transmitter that transmits a menu screen obtaining request and a sort key to a distribution server located on a network;
a receiver receives a menu screen displaying menus that are sorted in accordance with the sort key, the menu screen being received from the distribution server as a response to the obtaining request; and
a display that displays the received menu screen.

2. The multifunction apparatus according to claim 1, wherein the sort key is a counted number of previous usage of each menu.

3. The multifunction apparatus according to claim 1, wherein the sort key is a date of last usage for each menu.

4. The multifunction apparatus according to claim 1, wherein a menu item displayed on the menu screen is a menu name of a personal menu that is registered in the distribution server by each user.

5. A distribution server that distributes a menu screen to a multifunction apparatus, the distribution server comprising:
a receiver that receives a menu screen obtaining request and a sort key from the multifunction apparatus;
a sorter that sorts menus in accordance with the sort key, the menus being displayed on the menu screen, the menu screen being requested by the obtaining request; and
a transmitter that transmits the menu screen to the multifunction apparatus, the menu screen having the sorted menus.

6. The distribution server according to claim 5, further comprising:
a personal menu management table that registers a menu name and a management item, menu name being of a personal menu, and the management item being a sort key,
wherein, the management item is updated by obtaining updated information of the management item from the multifunction apparatus.

7. An operation screen display method comprising:
transmitting a menu screen obtaining request and a sort key from a multifunction apparatus to a distribution server, the server being located on a network;
receiving a menu screen at the multifunction apparatus, the menu screen being transmitted from the distribution server, as a response to the obtaining request, and displaying menus that are sorted according to the sort key;
displaying, on a display of the multifunction apparatus, the received menu screen; and
executing a selected menu from the displayed menu screen.

8. An operation screen display method comprising:
receiving a menu screen obtaining request and a sort key at a distribution server, the obtaining request and the sort key being transmitted from a multifunction apparatus;
sorting menus in the order of the sort key, the menus being displayed on the menu screen, the menu screen being requested by the obtaining request; and
transmitting the menu screen from the distribution server to the multifunction apparatus, the menu screen having the sorted menus.
